# EUROPEAN PATENT APPLICATION

(11) **EP 1 598 408 A1**
(43) Date of publication of application: **23.11.2005**
(21) Application number: 04076489.6
(22) Date of filing: 19.05.2004
(51) Int. Cl.: C09K 9/02, C08F 20/34, C08F 30/02, C07F 9/54

(54) **A polymer for a photochromic compound matrix, and a matrix comprising the said polymer**

(71) Applicant: Kim, Gyongtae, Kangnam-ku, Seoul (KR)
(72) Inventor: Kim, Gyongtae, Seoul (KR); Cho, Joung Hyun, Koyang-shi Kyongki-do (KR); Shon, Dong Woo, Koyang-shi Kyongki-do (KR); Choi, Hong Young, Kwangju-Kwangyok-shi (KR); Ryu, Jae Jun, Seoul (KR); Park, Jae Seok, Shiheung-si Gyeonggi-do (KR)
(74) Representative: Winckels, Johannes Hubertus F.

(57) **Abstract**

The present invention provides a polymer of Formula (4) or (5) as manufactured by polymerizing alkylmethacrylate of the formula (1) or its salt with 2-metacroxyethyl triammonium chloride of Formula (2) or vinyl monomer of phosphonium salt of the formula (3), and further provides a photochromic polymer matrix manufactured by blending the said polymer as the supporter with a known photochromic organic compound. Further, the present invention enables a glass or a mirror, of which the transmittance and/or the reflectance can be adjusted, to be manufactured by coating it with the said photochromic polymer matrix in a given thickness.

In the case of the glass manufactured by using the matrix of the present invention, it can be used in the field requiring adjustment the transmittance of light depending upon a weather condition, including a building or a car glass, a sunroof and the like. In the case of the mirror manufactured so, it can be applied to a rear-view mirror and a side view mirror for a vehicle and the like.

## Description

### BACKGROUND OF THE INVENTION

### Field of Invention

The present invention relates to a polymer for a photochromic compound matrix, and a matrix comprising the said polymer. Particularly, the present invention is to provide a polymer of formulas (4) or (5) prepared by polymerizing alkylmethacrylate of formula (1) as described later or its salt with 2-metacroxyethyl triammonium chloride of formula (2) as described later or a vinyl monomer of phosphonium salt of formula (3), a photochromic compound matrix prepared by blending the said polymer as the supporter with a known photochromic organic compound; and devices enabling a transmittance and/or a reflectance to be adjusted by coating a glass or a mirror with the said photochromic polymer matrix in a given thickness.

### Description of the Prior Art

Conventionally, various studies have been conducted in order to prevent a driver from being dazzled due to a light from the rearward by giving a photochromic property to a glass, particularly a rear view mirror or a side view mirror for a vehicle. For this purpose, various kinds of liquid crystal compounds have been used (for example, U.S. Patent Nos. 6,157,479, 6,175,441, 6,193,912 and 6,193,378). However, the mirror using such liquid crystal compound, even though its effect is rapid and stable, is limited in its publicly use, since the manufacturing cost is relatively high due to a few companies' exclusive possession of the technologies relating thereto. Therefore, there has been a demand for new and inexpensive devices (mirror, etc.). In response to such demand, a method for coating a glass or a mirror with a photochromic organic compound and using the coated one has been considered. The photochromic organic compound means a substance of which the color is changed to a specific color under the influence of polychromic light or monochromic light (e.g., UV light), and the changed color is restored (reinstated) to the original color when projection of the light is stopped or depending upon the influence of the polychromic light or monochromic light as projected initially or the influence of the temperature.

The photochromic organic compounds, which have been known to the person having a skill in the art, include spiropyran-family substances, viologen-family substances, diarylethen-family substances and the like. Specific examples of spiropyran-family substances include 1,3,3-trimethylindolinobenzopyrylospiran, 1,3,3-trimethylindolino-6'-bromobenzopyrylospiran, 1,3,3-trimethylindolino-8'-methoxybenzopyrylospiran, 1,3,3-trimethylindolino-β-naphthopyrylospiran, 1,3,3-trimethylindolinonaphthospirooxazin, 1,3,3-trimethylindolino-6'-nitrobenzopyrylospiran and the like. Specific examples of viologen-family substances include 1,1'-bis(2,4-dinitrophenyl)-4,4-bipyridinium dichloride, 1,1'-dibenzyl-4,4'-bipyridinium dichloride, 1,1'-di-n-heptyl-4,4'-bipyridinium dichloride, 1,1'-dimethyl-4,4'-bipyridinium dichloride, 1,1'-di-n-octyl-4,4'-bipyridinium dichloride, 1,1'-diphenyl-4,4'-bipyridinium dichloride, 4,4'-dipyridyl and the like. Specific examples of diarylethen-family substances include 2,3-bis(2,4,5-trimethyl -3-thienyl)maleic anhydride, 2,3-bis(2,4,5-trimethyl-3-thienyl)maleimide, cis-1,2-dicyano-1,2-bis(2,4,5-trimethyl-3-thienyl)ethen and the like..

In most cases, products are manufactured by blending a photochromic organic compound with a polymer host and using it as a coating material. Characteristics thereof, such as a color changing rate and a color restoring rate, a transmittance, durability and so on, are determined depending upon the affinity of the photochromic organic compound for the polymer matrix.

The said photochromic organic compound can be used for coating a host material such as a polymeric organic host material, or doped therewith by various methods known in the subject field. Such methods include a method for dissolving or dispersing a photochromic organic compound in the host material, for example, a method for adding the photochromic organic compound to the monomer host material before polymerization thereof and thereby casting it; a method for making a photochromic organic compound absorbed into the host material by impregnating or thermally moving the host material into a high temperature solution of the photochromic organic compound; a method for providing a photochromic organic compound as an individual layer between the adjacent host material layers, for example, as a part of the polymer film; and a method for using a photochromic organic compound as a coating material for the coating laid on the surface of the host material. The term of 'absorption' or 'making something absorbed' means a method for making the individual photochromic organic compound permeate into the host material, and a solvent assisted moving, vapor phase moving and other moving mechanism of the photochromic organic compound into a porous polymer.

Before, or concurrently with, or after coating or doping the host material with the photochromic organic compound, the host material can be doped with an auxiliary material. For example, before coating the host material with the photochromic organic compound, the ultraviolet absorber can be blended with the photochromic organic compound, or such absorber can be laid as a layer between the photochromic organic compound and the incident light. In addition, prior to coating the host material with the photochromic organic compound, a stabilizer can be blended with the photochromic organic compound in order to enhance the light fatigue resistance of the photochromic organic compound. The steric hindrance amine light stabilizer and the singlet oxygen dulling agent, and for example, such stabilizer as nickel ion including organic ligand are used. They can be used alone or in the form of a mixture. Such a stabilizer is described in U.S. Patent No. 4,720,356. Finally, a coating film for proper protection can be applied to the surface of the host material. It may include a coating film acting as an abrasion resistant coating film and/or an oxygen screening film.

As the polymer host material for the photochromic organic compound, following materials include polyol(allylcarbonate)monomer, polyacrylate, polymethacrylate, poly(alkylacrylate)cellulose acetate, cellulose triacetate, cellulose acetate propionate, cellulose acetate butyrate, poly(vinylacetate), poly(vinylalcohol), polyurethane, polycarbonate, polyehtylene terephthalate, polystyrene, poly(styrenemethyhnethacrylate)copolymer, poly(styreneaciylonitrile)copolymer, and polyvinylbutyral.

The said photochromic organic compounds are used in various application fields, including ophthalmic lenses, sunlight protective glasses, light filters, optical devices and observing devices, fancy goods, textiles, clothes and the like, by coating or doping the polymer host material with any of them.

However, many tests have been conducted on glasses, lenses, mirrors and the like by using the said polymer host as known to the public. As a result, it has been discovered that in case the coating work is done by blending the photochromic compound with the polymer host, except a case that a hollow body having a given space or a vapor-deposition, or an inner layer is formed, it is difficult to form and maintain the uniformity of the blending, and also in case the polymer host of carbonates or methacrylates known to have an excellent optical property is used, the color changing and restoring rate is so slow that it has no commercial value as a product.

### BRIEF DESCRIPTION OF THE DRAWINGS

Fig. 1 shows the result of measuring the change of reflectance between before or after color changing of the photochromic mirror according to Example 1.
Fig. 2 shows the change of transmittance between before or after color changing of the glass coated with the photochromic material according to Example 4.

### SUMMARY OF THE INVENTION

### [Problems sought for solution by the Invention]

Accordingly, it is an object of the present invention to find a photochromic organic compound an excellent color changing property and restoring rate, as well as the compounds being able to easily and uniformly blended with the photochromic polymer matrix.

### [Means for the Solution of the Problems]

With the foregoing circumstances in view, the present inventors have carried out an extensive investigation. As a result, it has been found that the polymers of formulas (4) and (5) as described later show an excellent color changing and restoring rate and these compounds are of a gel phase so that they can be easily and uniformly blended with the photochromic organic compound, thus leading to completion of the present invention.

### DESCRIPTION OF THE INVENTION

Polymers of formulas (4) or (5) according to the present invention can be prepared by polymerizing alkylmethacrylate of the following formula (1) or its salt with 2-methacroxyethyl triammonium chloride of the following formula (2) or its salt or vinyl monomer of phosponium salt of the following Formula (3): 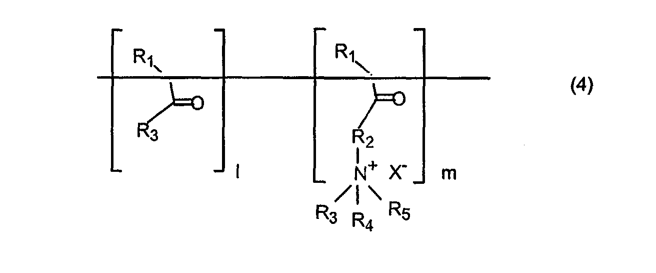 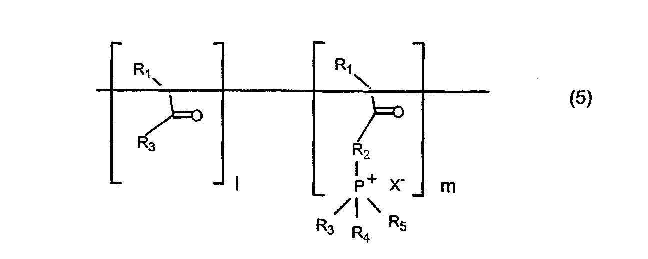 wherein R₁ represents hydrogen, halogen, hydroxy, alkyl, alkoxyalkyl, or phenyl group, R₂ represents is alkylene, oxyalkylene group having 1~12 carbon atoms, or phenylene group, R₃, R₄ and R₅ represents independently hydrogen, alkyl, cycloalkyl, hydroxyalkyl, alkoxyalkyl, alkenyl, aryl or phenyl group, 1 and m are an integer times of 1~4, n is an integer of 1~4, and X represents halogen atom.

### [Mode for Carrying out the Invention]

The polymers of the formulas (4) and (5) of the present invention can be prepared by polymerizing alkylmethacrylate of the compound of the following formula (1) or the salt with 2-methacroxyethyl triammonium chloride of the following formula (2) or its slat or vinyl monomer of phosponium salt of the following formula (3). 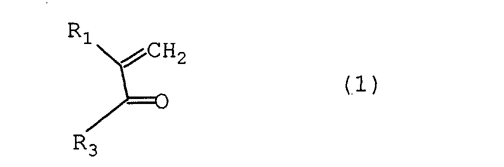 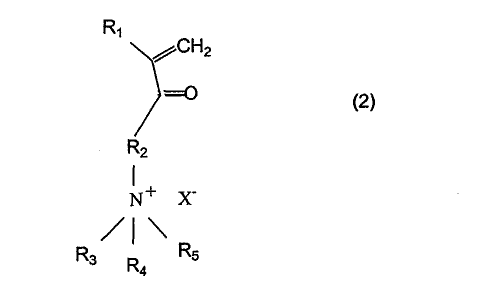 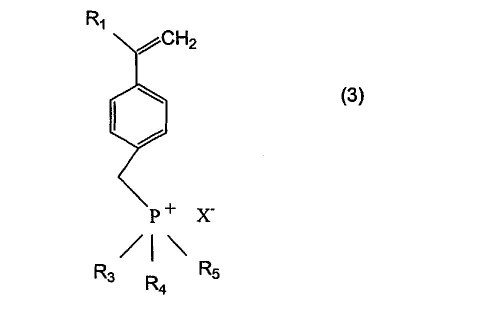 wherein R₁ represents hydrogen, halogen, hydroxy, alkyl, alkoxyalkyl, or phenyl group, R₂ represents is alkylene, oxyalkylene group having 1~12 carbon atoms, or phenylene group, R₃, R₄ and R₅ represents independently hydrogen, alkyl, cycloalkyl, hydroxyalkyl, alkoxyalkyl, alkenyl, aryl or phenyl group, 1 and m are an integer times of 1~4, n is an integer of 1~4, and X represents halogen atom.

Physical properties of polymers of formulas (4) and (5) depends upon the weight of each monomer compounds of formula (1), (2) and (3) as used. In order to manufacture such polymers, it is advantageous to react the monomer of formula (2) or (3) with the monomer of formula (1) at 1-80 wt.%, preferably 10-50 wt.%.

It is preferable that polymerization is made to take place through a radical polymerization, and that as an initiator for polymerization, a conventional initiator, i.e., a peroxide such as AIBN and benzoyl peroxide, is used, and that the reaction is made to progress while maintaining the temperature at 60□ under nitrogen atmosphere.

After completion of the reaction, 0.1N hydrochloric acid of 0.1g was added thereto, and it was agitated for one hour at the normal temperature and then the reaction is to be terminated. After such termination thereof, the end group is hydrogen atom.

The molecular weight of the manufactured polymer was measured by using GPC (ALLIANCE G, WATERS). The measured molecular weight of the polymer is in the range of 5,000 to 50,000, preferably 10,000 to 30,000, and more preferably 12,000 to 20,000.

The amount of the photochromic organic compound to be added for manufacturing the photochromic polymer matrix by using the manufactured polymer is not specifically limited, and it can be determined in consideration of the chromaticity, permeability, chromaticity of the changed color, chromaticity of the restored color of the object material and the velocity thereof. However, it is in the range of generally 0.01 to 30 wt.%, preferably 0.1 to10 wt.%, and more preferably from 0.5 to 5 wt.%.

In addition, in order to increase the durability of the photochromic polymer matrix, an appropriate amount of additive, such as a conventional stabilizer, an antioxidant, and an ultraviolet absorber may be added.

As a method of coating the substrate with the polymer according to the present invention, all methods known in the subject field, including spin coating, dip coating, flow coating, screen printing, knife coating and the like, can be used.

In the case of a color changing glass manufactured by using the photochromic polymer matrix, as manufactured by using the polymer suggested in the present invention and the photochromic organic compound widely used in general, as a coating material, it can be used in the field where it is necessary to adjust the transmittance of light depending upon a weather condition, such as a building, a car glass, a sunroof and the like. In the case of a color changing mirror, it can be used in the applicable field, including a rear view mirror and a side view mirror for the vehicle.

The process and products according to the present invention are further described in the following non-limiting examples.

### Examples 1 ~ 3

Propylmethacrylate(60g) and methacroxyethyl trimethyl ammonium chloride (20g) was dissolved in the solvent prepared by mixing ethylacetate with ethanol (1:1), and then 1.5g of 2,2'-azobisisobutyronitrile(AIBN), a radical initiator, was added thereto, and it was reacted as heating and agitating it for 24 hours at 60□ under nitrogen atmosphere. Then, the reaction was terminated by adding 0.5g of 0.1N hydrochloric acid thereto and agitating it for 1 hour at the room temperature. Thereby, the polymer of the formula (4), in which the ratio of acrylate monomer containing ammonium of the said formula (1) against propylmethacrylate having acrylate structure of the said formula (2) was 1:3, was manufactured (Example 1).

As a result of measuring the molecular weight of the polymer manufactured by using GPC (ALLIANCE G, WATERS), its value was found to be 15,000.

The polymer of the formula (4) to be used as a polymer supporter was manufactured by mixing propylmethacrylate with methacroxyethyl trimethyl ammonium chloride at the ratio of 2:1 (Example 2) and 1:1 (Example 3), respectively, and reacting it under the same condition as the above. 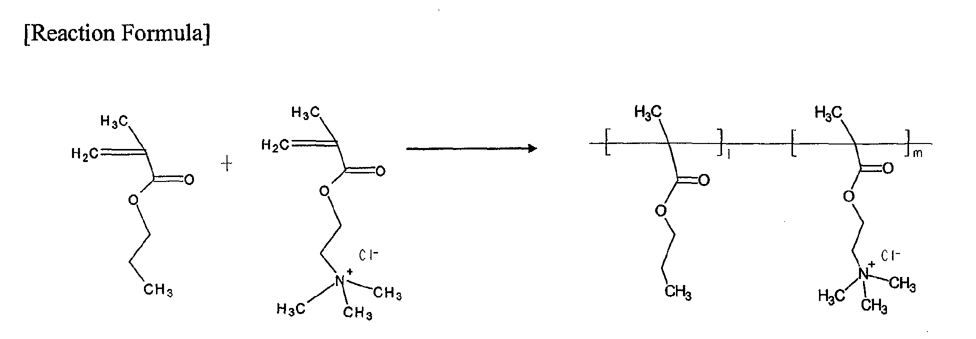 wherein 1 and m are an integer times of 1~4.

The result of measuring ¹H-NMR for identification of the said polymer is as shown in Table 1 below.

**[Table 1]**

| Peak number | Chemical shift (ppm) |
|---|---|
| 1,2 | 1.54 |
| 3 | 3.99 |
| 4 | 1.64 |
| 5 | 0.99 |
| 6 | 4.30 |
| 7 | 3.86 |
| 8 | 3.36 |

A polymer solution having the viscosity of 30cps by was manufactured by dissolving 20 wt.% of the manufactured polymeric monomer or its salt in acetone.

A photochromic organic compound solution was manufactured by selecting and dissolving 1,3,3-trimethylindolinonaphthospirooxazine as a photochromic organic compound for manufacturing the photochromic polymer matrix in acetone.

A photochromic polymer matrix was manufactured by adding 2.0 wt.% of the photochromic organic compound solution to the polymer solution manufactured beforehand and mixing them uniformly.

A color changing mirror was manufactured by coating a glass plate in the thickness of 10□ by using the manufactured photochromic polymer matrix as a spin coater and then vapor-depositing chrome, which was widely used for manufacturing a car mirror, on the coated surface.

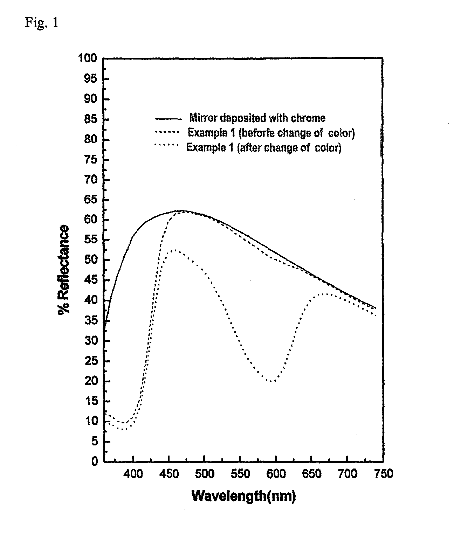

The results of measuring the reflectance of the manufactured color changing mirror before and after the color thereof was changed are shown in Fig. 1.

Also, the change of the reflectance of the color changing mirror depending upon the composition of the polymer supporter and the photochromic material is shown in Table 2 below.

**[Table 2]**

| | Polymer supporter (mixing ratio) | | Photochromic material | Reflectance** | |
|---|---|---|---|---|---|
| | 2-methacroxye thyltriamoniu m chloride | propylmethacrylate | 1,3,3-tnmethylindoluio naphthospirooxazine | Before change of the color (%) | After change of the color ***(%) |
| Example 1 | 1 | 3 | 2.0 wt.% | 54.42 % | 32.73 % |
| Example 2 | 1 | 2 | 2.0 wt.% | 54.42 % | 31.23% |
| Example 3 | 1 | 1 | 2.0 wt.% | 54.42 % | 31.42 % |

| | | | | | |
|---|---|---|---|---|---|
| * Chrome deposition reflectance: 93.96 % ** Minolta Spectrophotometer CM-3600d, D65 (Daylight 6500 Kelvin) lamp: used, Reflectance mode: measured | | | | | |
| *** Measured after exposure to 365nm UV lamp for 10 minutes. | | | | | |

### Examples 4 ~ 6

For synthesizing the vinyl monomer containing phosponium salt of the said Formula 3, the reaction was made to progress by agitating vinyl benzyl chloride (22.5g) and tributyl phospine (30g) at the normal temperature for 24 hours under nitrogen atmosphere, and after completion of the reaction, vinylbenzyltributylphosphonium chloride was synthesized by re-crystallizing it with ethylacetate.

Methymethacrylate(60g) and vinylbenzyl tributyl phosphonium chloride (20g) synthesized according to the said process were dissolved in ethylacetate, and then, 1.72g of AIBN, a radical initiator, was added thereto, and while it was heated and agitated at 60□ under nitrogen atmosphere, the reaction was made to progress for 24 hours. Finally, 0.1g of 0.1N hydrochloric acid was added thereto, and the reaction was made to be terminated by agitating it for one hour at the normal temperature. Thereby, the polymer of the formula (5), in which the ratio of vinyl benzyl tributyl phosphine salt, vinyl monomer containing phosphonium salt of the said formula (3) against methylmethacrylate monomer, monomer having the acrylate structure of the said formula 2 was 1:3 (Example 4), was manufactured.

As a result of measuring the molecular weight of the polymer manufactured by using GPC (ALLIANCE G, WATERS), its value was found to be 18,000.

The polymer (Formula 5) to be used as the polymer supporter was manufactured by mixing vinyl benzyl tributyl phosphine salt, vinyl monomer containing phosphonium salt with methylmethacrylate monomer, monomer having the arcrylate structure of the said formula (2) in the ratio of 1:2 (Example 5) and 1:1 (Example 6), respectively, in the same process as the above. 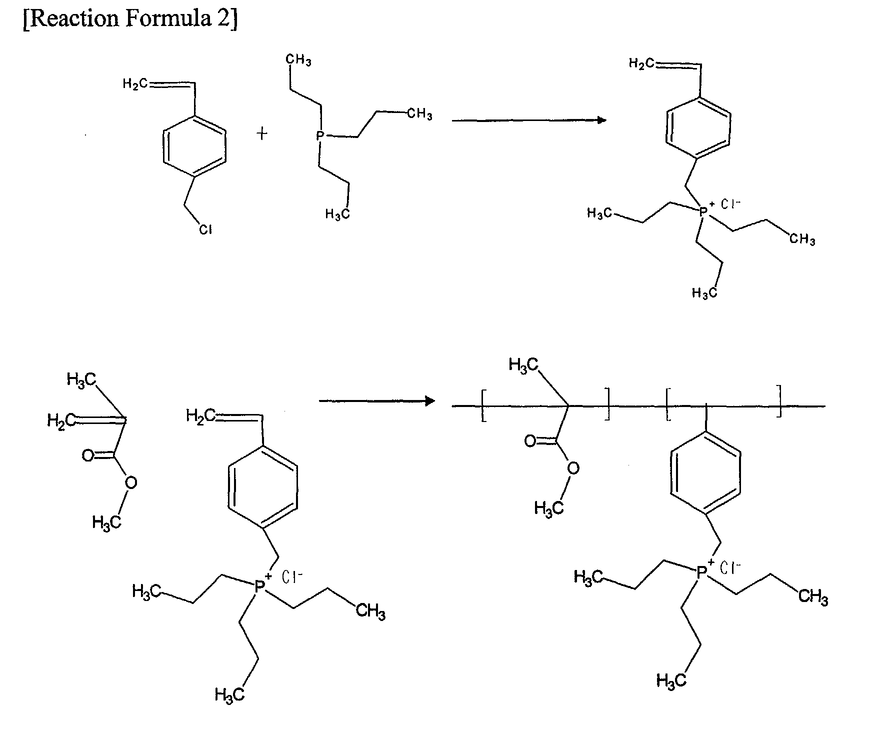 wherein 1 and m are an integer of 1 ~ 4.

The result of measuring ¹H-NMR of Formula 5 as obtained above is as shown in Table 3 below.

**[Table 3]**

| Peak number | Chemical shift (ppm) |
|---|---|
| 1 | 0.98 |
| 2 | 2.65 |
| 3 | 3.5 |
| 4,6 | 7.0 |
| 5,7 | 6.9 |
| 8 | 4.1 |
| 9 | 2.3 |
| 10 | 2.2 |
| 11 | 1.0 |

A polymer solution having the viscosity of 40cps was manufactured by dissolving 30 wt.% of the manufactured polymer in acetone.

As a photochromic organic compound for manufacturing the photochromic polymer matrix, 1,3,3-trimethylindolinonaphthospirooxazine was selected, and then the photochromic organic compound solution was manufactured by dissolving it in acetone.

The photochromic matrix polymer was manufactured by adding 2.0 wt.% of the photochromic organic solution to the polymer solution manufactured beforehand and then mixing them uniformly.

After a glass plate was coated in the thickness of 10 □ by using the manufactured photochromic polymer matrix as a spin coater and then the transmittance thereof was measured before and after the color thereof was changed.

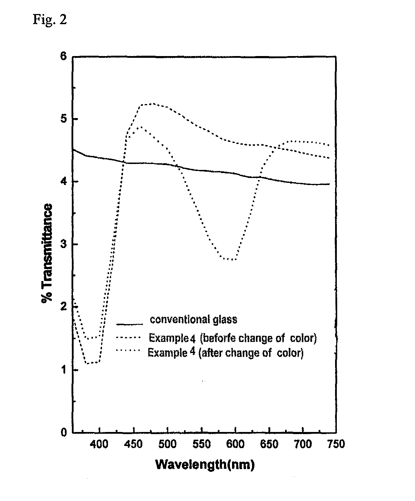

The results of measuring the transmittance of the glass coated with the photochromic material before and after the color thereof was changed are shown in Fig. 2.

Also, the change of the transmittance of the color changing glass depending upon the composition of the polymer supporter and the photochromic material is shown in Table 4 below.

**[Table 4]**

| | Polymer supporter (mixing ratio) | | photochromic material | Transmittance** | |
|---|---|---|---|---|---|
| | Vinylbenzyltri butylphospine salt | Methylmethacrylate | 1,3,3-trimethylindolino naphthospirooxazine | Before change of the color (%) | After change of the color ***(%) |
| Example 4 | 1 | 3 | 2.0 wt.% | 4.85% | 3.59% |
| Example 5 | 1 | 2 | 2.0 wt.% | 4.75% | 3.62% |
| Example 6 | 1 | 1 | 2.0 wt.% | 4.82% | 3.37% |

| | | | | | |
|---|---|---|---|---|---|
| * Glass transmittance: 4.18 % ** Minolta Spectrophotometer CM-3600d, D65 (Daylight 6500 Kelvin) lamp: used, Transmittance mode: measured | | | | | |
| *** Measured after exposure to 365nm UV lamp for 10 minutes | | | | | |

### Effect of the Invention

According to the present invention, the polymer of the formula (4) or (5) can be manufactured by polymerizing alkylmethacrylate of the formula (1) or its salt with 2-metacroxyethyl triammonium chloride of the formula (2) or vinyl monomer of phosphonium salt of the formula (3), and further the photochromic polymer matrix can be manufactured by mixing the said polymer with the known photochromic organic compound, and further a glass or a mirror, of which the transmittance and/or the reflectance can be adjusted, can be manufactured by coating a glass or a mirror with the said photochromic polymer matrix in a given thickness. Thus, in case the conventional supporter, such as carbonates, is blended with the photochromic compound and then it is used, the light color changing and/or restoring (reinstating) rate is so slow, and moreover, its affinity for the polymer, the supporter is so poor that it fails to have any practical use and expensive liquid crystal has to be used. The present invention is to provide a solution to such problem. That is to say, as the matrix is manufactured by using the polymer of the present invention, the manufacturing cost thereof is so low, and its affinity (uniform mixing) for the photochromic compound gets to be high, and the light color changing and restoring rate gets to be rapid. Therefore, the present invention is a very useful invention that can be widely used for a rear view mirror and a side view mirror for a vehicle, an exterior glass for a building and the like.

## Claims

1. A polymer of the following formulas (4) or (5) for a matrix: 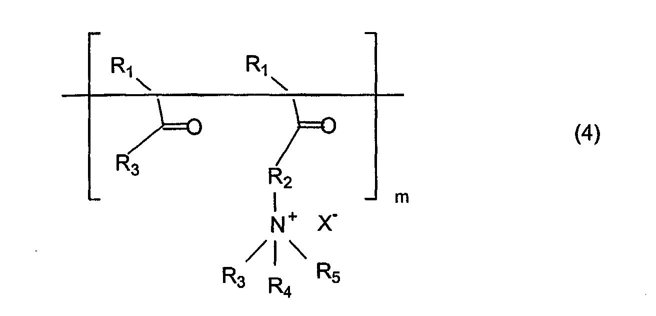 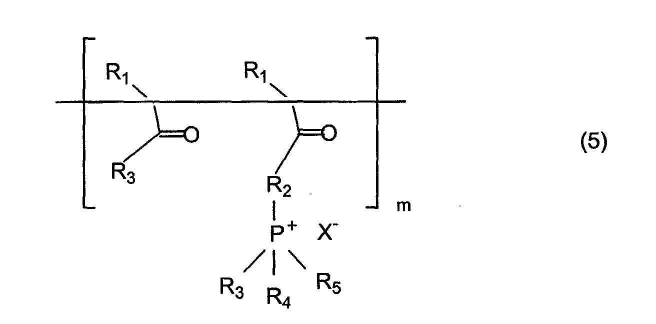 wherein R₁ represents hydrogen, halogen, hydroxy, alkyl, alkoxyalkyl, or phenyl group, R₂ represents is alkylene, oxyalkylene group having 1~12 carbon atoms, or phenylene group, R₃, R₄ and R₅ represents independently hydrogen, alkyl, cycloalkyl, hydroxyalkyl, alkoxyalkyl, alkenyl, aryl or phenyl group, 1 and m are an integer times of 1~4, n is an integer of 1~4, and X represents halogen atom.

2. A compound of the following Formula (3) for manufacturing the polymer of formula (5) as described in Claim 1. 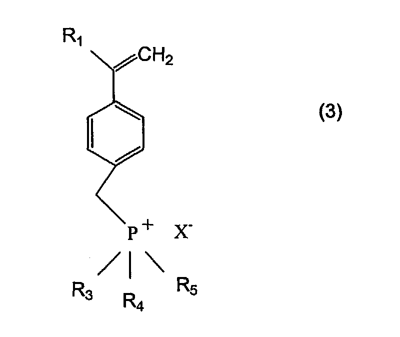 wherein R₁ represents hydrogen, halogen, hydroxy, alkyl, alkoxyalkyl, or phenyl group, R₂ represents is alkylene, oxyalkylene group having 1~12 carbon atoms, or phenylene group, R₃, R₄ and R₅ represents independently hydrogen, alkyl, cycloalkyl, hydroxyalkyl, alkoxyalkyl, alkenyl, aryl or phenyl group, and X represents halogen atom.

3. A photochromic polymer matrix manufactured by blending the polymer of the formula (4) or (5) as described in Claim 1 with the photochromic organic compound.

4. A photochromic polymer matrix according to Claim 3, wherein the photochromic organic compound is any one of selected from the group consisting of
spiropyran-family substance such as 1,3,3-trimethylindolinobenzopyrylospiran, 1,3,3-trimethylindolino-6'-bromobenzopyrylospiran, 1,3,3-trimethylindolino-8'-methoxy-benzo-pyrylospiran, 1,3,3-trimethylindolino-β-naphthopyrylospiran, 1,3,3-trimethylindolinonaphthospirooxazine, 1,3,3-trimethylindolino-6'-nitrobenzopyrylospiran;
viologen-family substance such as 1,1'-bis(2,4-dinitrophenyl)-4,4'-bipyridinium dichloride, 1,1'-dibenzyl-4,4'-bipyridinium dichloride, 1,1'-di-n-heptyl-4,4'-bipyridinium dichloride, 1,1'-dimethyl-4,4'-bipyridinium dichloride, 1,1'-di-n-octyl-4,4'-bipyridiniym dichloride, 1,1'-diphenyl-4,4'-bipyridinium dichloride and 4,4'-dipyridyl;
or diarylethen-family substance such as selected from the group consisting of 2,3-bis(2,4,5-trimethyl -3-thienyl)maleic anhydride, 2,3-bis(2,4,5-trimethyl-3- thienyl)-maleimide, and cis-1,2-dicyano-1,2-bis(2,4,5-trimethyl-3-thienyl)ethen; or a mixture thereof.
